Europäisches Patentamt

European Patent Office

Office européen des brevets

(19)

(11) Publication number: **0 107 478**
**B1**

(12) **EUROPEAN PATENT SPECIFICATION**

(45) Date of publication of patent specification: **04.03.87**

(21) Application number: **83306348.0**

(22) Date of filing: **19.10.83**

(51) Int. Cl.⁴: **B 65 G 65/44,** B 65 G 47/19,
G 01 G 13/00

(54) Dispersing supply device in automatic weighing apparatus.

(30) Priority: **19.10.82 JP 157752/82**

(43) Date of publication of application:
**02.05.84 Bulletin 84/18**

(45) Publication of the grant of the patent:
**04.03.87 Bulletin 87/10**

(84) Designated Contracting States:
**DE FR GB IT**

(56) References cited:
**GB-A-2 085 172**

(73) Proprietor: **KABUSHIKI KAISHA ISHIDA KOKI
SEISAKUSHO
44, Shogoin Sannou-cho Sakyo-ku
Kyoto-shi Kyoto 606 (JP)**

(72) Inventor: **Kataoka, Koichi
343-2, Kitanakakouji Rittou-cho
Kurita-gun Shiga (JP)**

(74) Representative: **Fane, Christopher Robin King
et al
HASELTINE LAKE & CO. Hazlitt House
28 Southampton Buildings Chancery Lane
London, WC2A 1AT (GB)**

Courier Press, Leamington Spa, England.

## Description

This invention relates to dispersing supply devices in an automatic weighing apparatus of the combinatorial weighing type.

A known automatic weighing apparatus of the combinatorial weighing type operates by supplying a plurality of weighing machines with articles to be weighed, the weighing machines being arrayed in a circle about the periphery of a centrally located dispersing table, combining the weight values provided by the weighing machines into a number of different combinations, selecting from among these combinations a so-called "optimum combination" whose total weight value gives a predetermined weight, and discharging from weighing machines only those articles corresponding to the selected optimum combination, thereby providing a batch of the articles having the predetermined weight. Such an automatic weighing apparatus is known from GB—A—2 085 172 and includes radially disposed dispersing supply devices equal in number to the weighing machines for dispersing the articles radially outward from the dispersing table and supplying them to the weighing machines. In such a known arrangement, each dispersing supply device, which includes a trough and a trough vibrator, is fixedly secured on a mounting base. Cleaning the trough or zero-adjusting the vibrator may require that the device be detached from the mounting base. With the known arrangements, however, detaching and reattaching the dispersing supply device can be a troublesome operation.

According to the present invention, there is provided a combinatorial weighing apparatus comprising a plurality of weighing machines, a plurality of dispersing supply devices, mounted on a support structure, for transferring articles to be weighed from a common supply of such articles to respective hoppers of the said weighing machines, and output collection means for receiving articles discharged from the weighing machines,

characterised in that each of the dispersing supply devices has a base plate portion formed with first and second elongate slot portions, which are aligned in a direction from the said common supply to the hopper associated with the device concerned, and is located in its operative position on the said support structure by means of first and second pins which project from the support structure and extend respectively through the said first and second slot portions, the pins having respective head portions which are wider than the said first and second slot portions so that the base plate portion is retained between the said support structure and the said head portions;

each of the said first and second slot portions being widened at its end nearer the said common supply so as to provide respective first and second slot parts, wider than the respective head portions of the pins, which enable the device to be demounted from the support structure after the device has been moved in the said direction so as to bring the said slot parts to the positions of the respective pins,

and further characterised by releasable retaining means effective between each dispersing supply device and the said support structure to inhibit movement of the device in the said direction, away from its operating position, when the device is in use.

Reference will now be made, by way of example, to the accompanying drawings, in which like reference characters designate the same or similar parts throughout the figures thereof, and in which:

Fig. 1 shows a partly-sectioned side elevational view of a combinatorial weighing apparatus embodying the present invention;

Fig. 2 shows a side view of a dispersing supply device portion of combinatorial weighing apparatus embodying the present invention;

Fig. 3 shows a partial plan view corresponding to line III—III of Fig. 2; and

Figs. 4 and 5 show plan and side views, respectively, of a plate member constituting part of a second embodiment of the present invention.

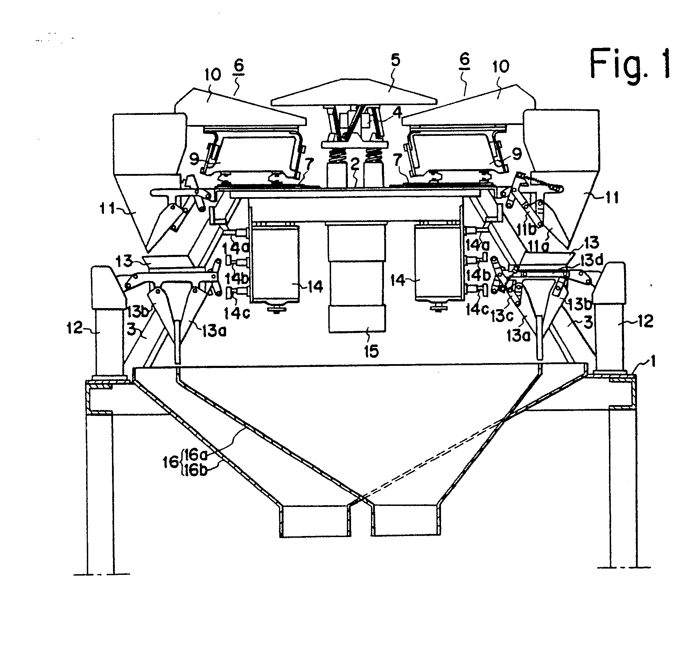

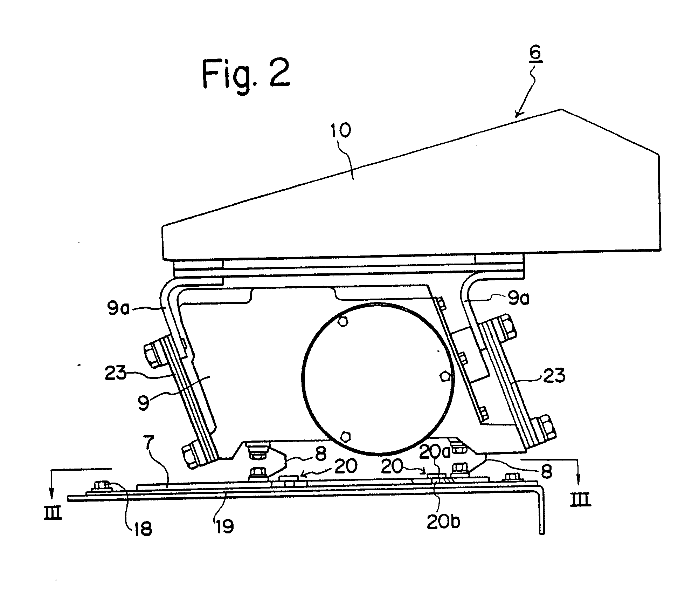

Fig. 1 illustrates the overall construction of an automatic weighing apparatus, which comprises a base 1 and a support structure including a mounting table 2 supported on and positioned above the central portion of the base 1 by a plurality of supporting legs 3. An article dispersing table 5 is supported centrally on the mounting table 2 by a vibrator unit 4, and a plurality of dispersing supply devices 6 are disposed radially around the dispersing table 5. As shown in Fig. 2, each dispersing supply device 6 has a base plate portion 7, a vibrator unit 9 supported on the base plate portion 7 by a pair of U-shaped leaf springs 8, and a trough 10. The trough 10 is fixedly secured to a pair of mounting members 9a each of which is attached to the upper end of a group of leaf springs 23. The lower end of the left-hand group of leaf springs 23 is secured to the front end of the vibrator unit 9, while the lower end of the right-hand group of leaf springs 23 is secured to the rear end of the vibrator unit.

Returning to Fig. 1, the automatic weighing apparatus further includes pool hoppers 11, equal in number to the dispersing supply devices 6, mounted on the peripheral edge of the mounting table 2 below the supply troughs 10 of the corresponding dispersing supply devices 6, weighing machines 12, equal in number to the dispersing supply devices 6 (and, hence, the pool hoppers 11), mounted on the base 1 as a circular array in radial alignment with the dispersing supply devices 6 or the pool hoppers 11, respectively, and a plurality of weighing hoppers 13 attached respectively to the weighing machines 12 and located below the pool hoppers 11, respectively. Each pool hopper 11 is provided with a gate 11a, and each weighing hopper 13 is provided with a pair of gates 13a, 13b. Hopper actuating units 14, equal in number to the hopper sets, depend from the bottom of the mounting table 2 at positions corresponding to the hopper sets, each of which is composed of a pool hopper 11 and underlying weighing hopper 13. Each hopper actuating unit 14 comprises a push rod 14a which, when extended, operates through a link mechanism 11b to open the gate 11a of the pool hopper 11, and push rods 14b, 14c which, when extended, operate through respective link mechanisms 13c, 13d to open the gates 13a, 13b of the corresponding weighing hopper 13. Numeral 16 denotes a collecting chute having a wide upper opening for receiving the articles discharged from the weighing hoppers 13. Since each of the weighing hoppers 13 has two gates 13a, 13b, the collecting chute 16 is composed of an inner chute 16a for receiving the articles discharged from the gate 13a of each weighing hopper 13 and an outer chute 16b for receiving the articles discharged from the gate 13b of each weighing hopper 13.

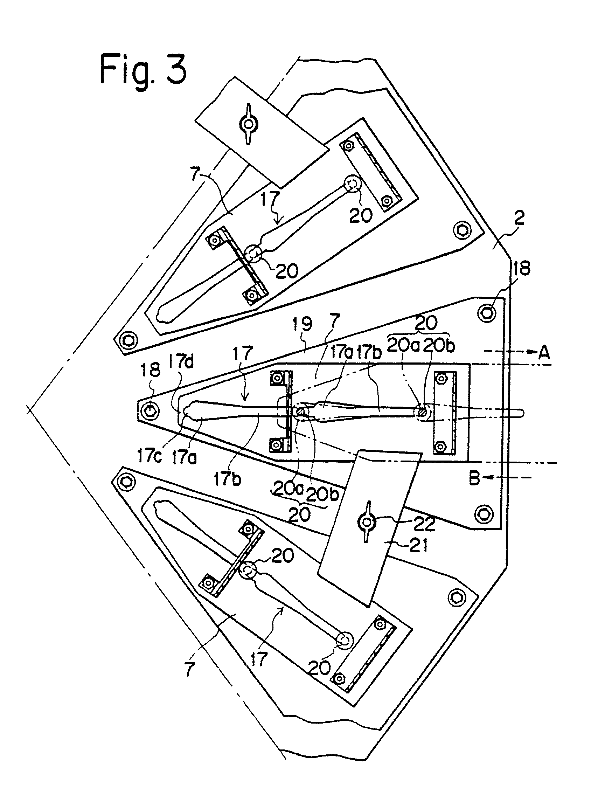

As shown in Figs. 2 and 3, the base plate portion 7 of each dispersing supply device 6 is formed wth a mounting slot 17 exxtending longitudinally of the base plate portion 7 and radially of the weighing apparatus. The mounting slot 17 includes two comparatively slender aligned elongate portions 17b which have respective widened parts 17a at their ends nearer the dispersing table 5. The upper surface of the mounting table 2 on which the base plate portion 7 is disposed (i.e., in the illustrated embodiment, the upper surface of a support plate member 19 fixedly secured to the mounting table by bolts 18) is provided with two projecting pins 20, each having a head portion 20a of a relatively large diameter and a shaft portion 20b of smaller diameter. The pins 20 extend respectively through and engage with the two slender portions 17b of the mounting slot 17 provided in the base plate portion 7. The distance between the two wide parts of the mounting slot 17 is equal to the spacing between the two pins 20 and the wide parts 17a are large enough to allow passage therethrough of the pin head portions 20a.

A clamping plate 21 is provided astride mutually adjacent ones of the base plate portions 7. By tightening a thumb screw 22, the clamping plate 21 can be urged towards the mounting table 2, thereby fixedly clamping the base plate portions on either side of the clamping plate 21 to the mounting table 2. Each of the pins 20 is so designed that the shaft portion 20b thereof has a length slightly greater than the thickness of the base plate portion 7, thereby allowing the base plate portion 7 to slide smoothly between the head portion 20a of the pin and the mounting table 2 (plate member 19). In the illustrated embodiment, only one clamping plate 21 between each adjacent pair of base plate portions 7 is shown.

In accordance with the foregoing construction, each dispersing supply device 6 for supplying the corresponding pool hopper 11 with articles from the dispersing table 5 is attached to the mounting table 2 by engaging the pair of pins 20, whose head portions 20a project from the upper surface of the mounting table 2, with the corresponding slender portions 17b of the mounting slot 17 formed in the base plate portion 7. Since the mounting slot 17 is formed to include the two wide parts 17a having the same spacing as the pair of pins 20 and a lateral width dimensioned to allow the pin head portions 20a to pass therethrough, the dispersing supply device 6 may be detached from the mounting table 2 in the following manner. First, the thumb screw 22 is loosened, followed by removing the clamping plate 21 from the base plate portion 7 or rotating the clamping plate 21 through an angle of about 90°. Then, as indicated by the phantom lines in Fig. 3, the base plate portion 7, with the rest of the dispersing supply device 6, is pulled in the direction of the arrow A while the pin shaft portions 20b engage with the slender portions 17b of the slots 17. Thus, the entire body of the dispersing supply device 6 slides in linear fashion while being guided by the pin shafts mating with the slender portions of the slots. When the wide parts 17a of the mounting slot 17 come into positional alignment with the pins 20 and slot 17 may be disengaged from the pins 20. This is accomplished merely by lifting the dispersing supply device 6 from the mounting table 2, thereby detaching the former from the latter.

To attach the dispersing supply device to the mounting table 2, the wide parts 17a of the mounting slot 17 in base plate portion 7 are aligned with the pins 20, the base plate portion 7 is depressed so that the pins 20 will pass through the wide parts 17a of the slot 17, and the base plate portion 7 is slid in the direction of arrow B in Fig. 3 to engage the pin shaft portions 20b with the slender portions 17b of the mounting slot 17. As shown in the illstrated embodiment, the dimensions should be such that the dispersing supply device 6 arrives at a predetermined operative position when slid to bring one of the pins 20 into abutting contact with the end portion of the corresponding slender portion 17b of the slot 17. This will make it unnecessary to reposition the dispersing supply device after it has been attached. Further, by so arranging it that the dispersing supply device 6 is slid radially outwardly of the apparatus (namely in the direction A) when being detached, as in the illustrated embodiment, the detaching operation is facilitated and the positions at which the dispersing supply devices 6 are disposed can be brought close to the center of the mounting table 2, thereby making it possible to reduce the overall size of the automatic weighing apparatus.

In the illustrated embodiment, the springs 8 interconnecting the base plate portion 7 and the vibrator unit 9 of the dispersing supply device 6 are leaf springs having a U-shaped cross section the width direction of which perpendicularly intersects the direction in which the articles to be weighed are supplied (i.e., the longitudinal direction of the trough or base plate portion). The springs 8 resiliently support the vibrator unit 9 to prevent vibration from being transmitted to the weighing apparatus proper through the mounting table 2.

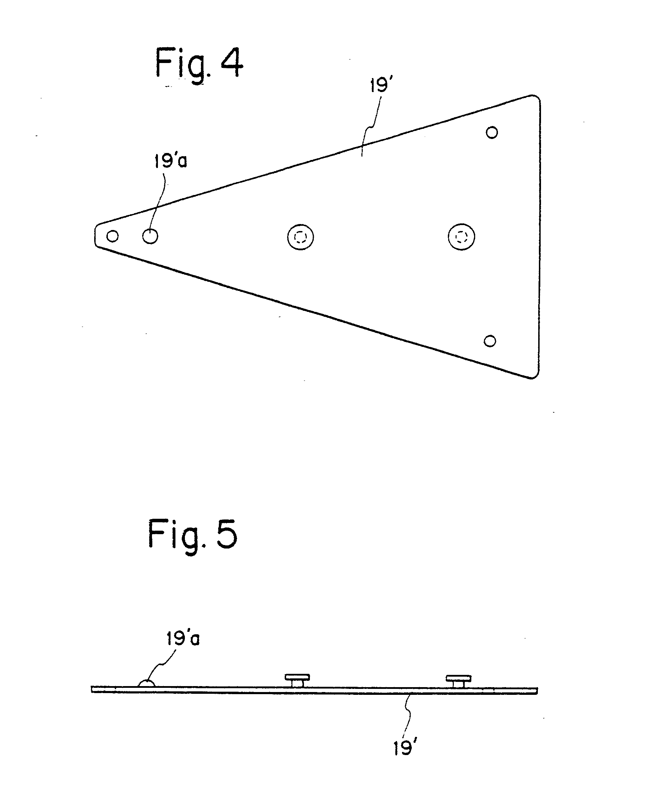

Fig. 4 is a plan view of a plate member 19' according to another embodiment of the present invention. In this embodiment, the plate member 19' substantially has the form of an isosceles triangle and is formed to include a spherically rounded projection 19'a on the central line of the triangle adjacent the apex thereof. The plate member 19', when substituted for the plate 19 in Fig. 3, has its rounded projection 19'a fitted into a semicircular recess 17c formed in the head of the mounting slot 17 provided in the base plate portion 7. With such a construction, the mounting slot 17 of the base plate portion is engaged at both extremities thereof, namely at the inward end (the end directed towards the center of the weighing apparatus) by the rounded projection 19'a and the outward end (the end directed away from the center of the weighing apparatus) by one of the pins 20. This form of retaining means enhances the support of the base plate portion 7 and makes it possible to dispense with the clamping plate 21 and thumb screw 22. It should be noted that when the dispersing supply device 6 is slid in the A direction or B direction in this case, a bridging potion 17d at the head of the base plate portion 7 rides on the rounded projection 19'a owing to the flexibility of the plate portion and a clearance which results from the difference between the length of the pin shaft portion 20b and the thickness of the base plate portion 7. The rounded projection 19'a acts as a detent, and the resistance to sliding offered thereby serves to retain the dispersing supply device 6.

In the embodiments of the present invention as described and illustrated hereinabove, the radially disposed dispersing supply devices for supplying articles to the weighing hoppers of plural weighing machines from a centrally located dispersing table in an automatic weighing apparatus are adapted so as to be readily attached to and detached from a mounting table. This facilitates the cleaning of the troughs and the zero adjustment of the vibrators constituting the dispersing supply devices and permits these dispersing supply devices to be attached or detached even while the weighing apparatus is in operation.

**Claims**

1. A combinatorial weighing apparatus comprising a plurality of weighing machines (12), a plurality of dispersing supply devices (6), mounted on a support structure (2), for transferring articles to be weighed from a common supply (5) of such articles to respective hoppers (13) of the said weighing machines, and output collection means (16) for receiving articles discharged from the weighing machines, characterised in that each of the dispersing supply devices (6) has a base plate portion (7) formed with first and second elongate slot portions (17b), which are aligned in a direction from the said common supply (5) to the hopper (13) associated with the device concerned, and is located in its operative position on the said support structure (2) by means of first and second pins (20) which project from the support structure (2) and extend respectively through the said first and second slot portions (17b), the pins (20) having respective head portions (20a) which are wider than the said first and second slot portions (17b) so that the base plate portion (7) is retained between the said support structure (2) and the said head portions (20a);

each of the said first and second slot portions (17b) being widened at its end nearer the said common supply (5) so as to provide respective first and second slot parts (17a), wider than the respective head portions (20a) of the pins, which enable the device (6) to be demounted from the support structure (2) after the device has been moved in the said direction so as to bring the said slot parts (17a) to the positions of the respective pins (20),

and further characterised by releasable retaining means (19'a, 21, 22) effective between each dispersing supply device (6) and the said support structure (2) to inhibit movement of the device in the said direction, away from its operating position, when the advice is in use.

2. Apparatus as claimed in claim 1, wherein the said releasable retaining means comprise a clamping plate (21), adapted to span respective base plate portions (7) of two adjacent dispersing supply devices (6) and screw-threaded means (22) for urging the said clamping plate towards the said support structure so as to clamp the said respective base plate portions thereto.

3. Apparatus as claimed in claim 1, wherein the said releasable retaining means comprise a spherically rounded projection (19'a), provided on the said support structure (2), and a complementary recess (17c), provided at the end of the said slot part (17a) which is nearest to the said common supply (5), into which recess the said rounded projection fits when the said dispersing supply device (6) is in its operative position.

4. Apparatus as claimed in claim 1, 2 or 3, wherein the said dispersing supply devices (6) are arrayed radially about a central axis of the said common supply (5) of articles.

5. Apparatus as claimed in any preceding claim, wherein the said first and second slot portions (17b) communicate with one another so as to form a continuous slot.

6. Apparatus as claimed in any preceding claim, wherein each of the said dispersing supply devices (6) comprises a trough (10) mounted by means of leaf springs (23) on vibrator means (9), vibratory movement being imparted to the trough from the vibrator means through the said leaf springs when the device is in use, and the said vibrator means (9) being mounted on the said base plate portion (7) of the device through the intermediary of springs (8).

## Patentansprüche

1. Kombinatorische Wägevorrichtung mit mehreren Wägeapparaten (12), mehreren auf einem Stützgestell (2) befestigten Verteilungszuführvorrichtungen (6) zum Befördern von zu wiegenden Gegenständen von einer gemeinsamen Zuführvorrichtung (5) für solche Gegenstände zu entsprechenden Behältern (13) der Wägeapparate, und Ausgabesammelvorrichtungen (16) zum Aufnehmen aus den Wägeapparaten ausgegebener Gegenstände,

dadurch gekennzeichnet, daß jede Verteilungszuführvorrichtung (6) ein Grundplattenteil (7) aufweist, in dem ein erster und ein zweiter länglicher Schlitzbereich (17b) ausgebildet sind, die in einer von der gemeinsamen Zuführvorrichtung (5) zum der betreffenden Vorrichtung zugeordneten Behälter (:13) verlaufenden Richtung angeordnet sind, und in ihrer Betriebsposition auf dem Stützgestell (2) mittels eines ersten und eines zweiten Stiftes (20) angebracht ist, welche aus dem Stützgestell (2) herausragen und sich durch den ersten bzw. zweiten Schlitzbereich (17b) erstrecken, wobei die, Stifte (20) jeweils Köpfe (20a) besitzen, welche breiter sind als der erste und zweite Schlitzbereich (17b), so daß das Grundplattenteil (7) zwischen dem Stützgestell (2) und den Köpfen (20a) gehalten ist;

daß sich der erste und der zweite Schlitzbereich (17b) an ihrem näher zur gemeinsamen Zuführvorrichtung (5) gelegenenen Ende verbreitern, um einen entsprechenden ersten und einen zweiten Schlitzteil (17a) zu bilden, welche breiter als die betreffenden Köpfe (20a) der Stifte, wobei die Schlitzteile es ermöglichen, die Vorrichtung (6) vom Stützgestell (2) absunehmen, nachdem die Vorrichtung in die benannte Richtung bewegt worden ist, um die Schlitzteile (17a) in die Positionen der betreffenden Stifte (20) zu versetzen,

und weiterhin gekennzeichnet durch lösbare Haltevorrichtungen (19'a, 21, 22), die zwischen jeder Verteilungszuführvorrichtung (6) und dem Stützgestell (2) wirken, um eine Bewegung der Vorrichtung von ihrer Betriebsposition in die benannte Richtung zu verhindern, wenn die Vorrichtung in Betrieb ist.

2. Vorrichtung nach Anspruch 1, dadurch gekennzeichnet, daß die lösbaren Haltevorrichtungen eine Klemmplatte (21) aufweisen, welche die entsprechenden Grundplattenteile (7) zweier angrenzender Verteilungszuführvorrichtungen (6) und Schraubengewindeteile (22) überspannen kann, um die Klemmplatte in Richtung des Stützgestells zu drücken, so daß sie die entsprechenden Grundplattenteile an dieses klemmt.

3. Vorrichtung nach Anspruch 1, dadurch gekennzeichnet, daß die lösbaren Haltevorrichtungen einen auf dem Stützgestell (2) angebrachten sphärisch gerundeten Vorsprung (19'a) und eine komplementäre Aussparung (17c) aufweisen, die an dem der gemeinsamen Zuführvorrichtung (5) am nächsten liegenden Ende des Schlitzteils (17a) vorgesehen ist, wobei der gerundete Vorsprung sich in die Aussparung einpaßt, wenn sich die Verteilungszuführvorrichtung (6) in ihrer Betriebsposition befindet.

4. Vorrichtung nach Anspruch 1, 2 oder 3, dadurch gekennzeichnet, daß die Verteilungszuführvorrichtungen (6) radial um eine Mittelachse der gemeinsamen Zuführvorrichtung (5) für die Gegenstände angeordnet sind.

5. Vorrichtung nach einem der vorhergehenden Ansprüche, dadurch gekennzeichnet, daß der erste und der zweite Schlitzbereich (17b) zur Bildung eines kontinuierlichen Schlitzes miteinander in Verbindung stehen.

6. Vorrichtung nach einem der vorhergehenden Ansprüche, dadurch gekennzeichnet, daß jede Verteilungszuführvorrichtung (6) einen durch Blattfedern (23) auf einem Vibrator (9) angebrachten Trog (10) aufweist, wobei dem Trog bei Betrieb der Vorrichtung eine Vibrationsbewegung von dem Vibrator durch die Blattfedern vermittelt wird, und der Vibrator (9) durch die Zwischenschaltung von Federn (8) auf dem Grundplattenteil (7) der Vorrichtung angebracht ist.

## Revendications

1. Appareil de pesage combiné comportant une pluralité de machines peseuses (12), une pluralité de dispositifs distributeurs (6) d'alimentation, montés sur une structure (2) de support, pour le transfert d'articles devant être pesés depuis une alimentation commune (5) de ces articles, vers des trémies correspondantes (13) des machines peseuses, et un moyen collecteur (16) de sortie pour recevoir les articles déchargés des machines peseuses,

caractérisé en ce que chacun des dispositifs distributeurs (6) d'alimentation est muni d'une plaque d'appui (7) formée d'une première et d'une seconde parties (17b) en forme d'encoches allongées qui sont alignées dans une direction à partir de cette alimentation commune (5) vers la trémie (13) associée au dispositif concerné, et est placé en position de fonctionnement sur cette structure (2) de support au moyen d'un premier et d'un deuxième goujons (20) faisant saillie à partif de la structure (2) de support et se prolongeant respectivement à travers les première et seconde parties (17b) en fome d'encoches, les goujons (20) ayant des têtes (20a) qui sont plus larges que ces première et deuxième parties (17b) en forme d'encoches afin de maintenir la plaque d'appui entre la structure (2) de support et les têtes (20a);

chacune de ces première et deuxième parties (17b) en forme d'encoches étant à son extrémité la plus proche de l'alimentation commune (5) de manière à constituer respectivement des première et deuxième parties (17a) d'encoches plus larges que les têtes (20a) des goujons, ce qui permet de démonter le dispositif (6) de la structure (2) de support après que le dispositif a été déplacé dans ladite direction de manière à amener les parties (17a) en forme d'encoche en face des goujons (20) respectifs;

et caractérisé en outre par des moyens amovibles (19'a, 21, 22) de maintien agissant entre chaque dispositif distributeur (6) d'alimentation et la structure (2) de support afin d'empêcher le mouvement de ce dispositif dans ladite direction opposée à sa position de fonctionnement, lorsque le dispositif est en marche.

2. Appareil suivant la revendication 1, dans lequel le moyen amovible de maintien comporte une plaque (21) de serrage, prévue pour chevaucher les plaques d'appui respectives (7) de deux dispositifs distributeurs contigus (6) d'alimentation, ainsi qu'un moyen fileté (22) formant vis pour pousser la plaque de serrage vers la structure de support afin de fixer les plaques d'appui respectives à cette dernière.

3. Appareil suivant la revendication 1, dans lequel les moyens amovibles de maintien comportent une saillie arrondie (19'a) en forme de sphère, prévue sur la structure (2) de support, ainsi qu'une échancrure complémentaire (17c) formée à l'extrémité de la partie (17a) en forme d'encoche qui est située le plus près de l'alimentation commune (5), dans laquelle échancrure se loge la saillie arrondie lorsque le dispositif distributeur (6) d'alimentation est en position de fonctionnement.

4. Appareil suivant l'une des revendications 1, 2 ou 3, dans lequel les dispositifs distributeurs (6) d'alimentation sont disposés de façon radiale autour de l'axe central de l'alimentation commune (5) des articles.

5. Appareil suivant l'une quelconque des revendications précédentes, dans lequel al première et la deuxième parties (17b) en forme d'encoche communiquent l'une avec l'autre de manière à former une encoche continue.

6. Appareil suivant l'une quelconque des revendications précédentes, dans lequel chacun des distributeurs (6) d'alimentation comprend une auge (10) montée au moyen de ressorts à lames (23) sur un moyen (9) formant vibreur, un mouvement de vibration étant transmis à l'auge depuis le moyen formant vibreur par l'intermédiaire des ressorts à lames lorsque le dispositif est en fonctionnement, et le moyen (9) formant vibreur étant monté sur la plaque d'appui (7) du dispositif par l'intermédiaire de ressorts (8).

Fig. 1

# Fig. 2

Fig. 3

# Fig. 4

# Fig. 5